# FASCICULE DE BREVET EUROPEEN

(11) **EP 0 626 055 B1**
(45) Date de publication et mention de la délivrance du brevet: **29.10.1997**
(21) Numéro de dépôt: 92924531.4
(22) Date de dépôt: 14.12.1992
(51) Int. Cl.: F24C 15/18, A47J 37/06, A47J 37/01, A47J 36/34

(54) **PETIT FOUR POUR GRILLER DES ALIMENTS SUR LES BRULEURS DES CUISINIERES A GAZ**
KLEINER OFEN ZUM GRILLEN VON LEBENSMITTELN AUF DEN BRENNERN DER GASHERDE
SMALL OVEN FOR GRILLING FOOD ON GAS COOKER BURNERS

(43) Date de publication de la demande: 30.11.1994
(73) Titulaire: SANS, Jaime, CH-1205 Genève (CH)
(72) Inventeur: SANS, Jaime, CH-1205 Genève (CH)
(86) Numéro de dépôt international: CH9200243
(87) Numéro de publication internationale: WO9314352

(56) Documents cités:
- DE-A- 2 409 583
- DE-A- 3 928 730
- DE-C- 852 896
- GB-A- 1 587 286
- NO-C- 37 043
- US-A- 639 646
- US-A- 1 458 002

## Description

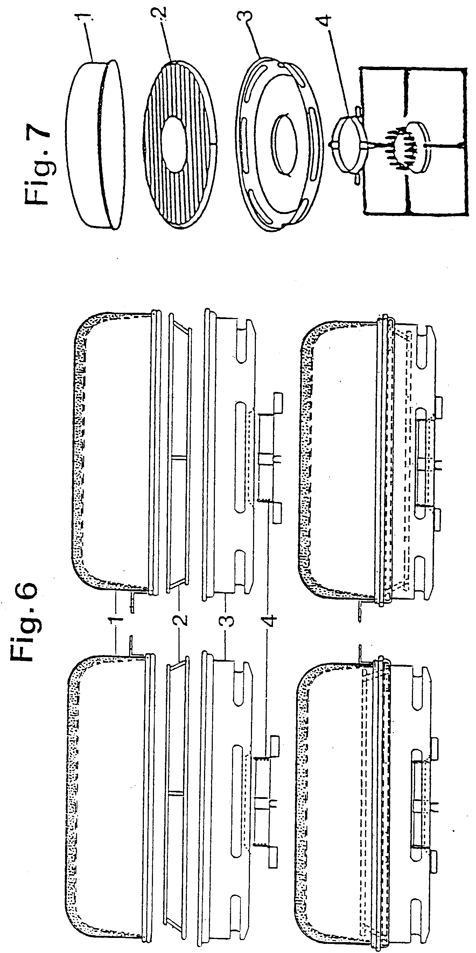

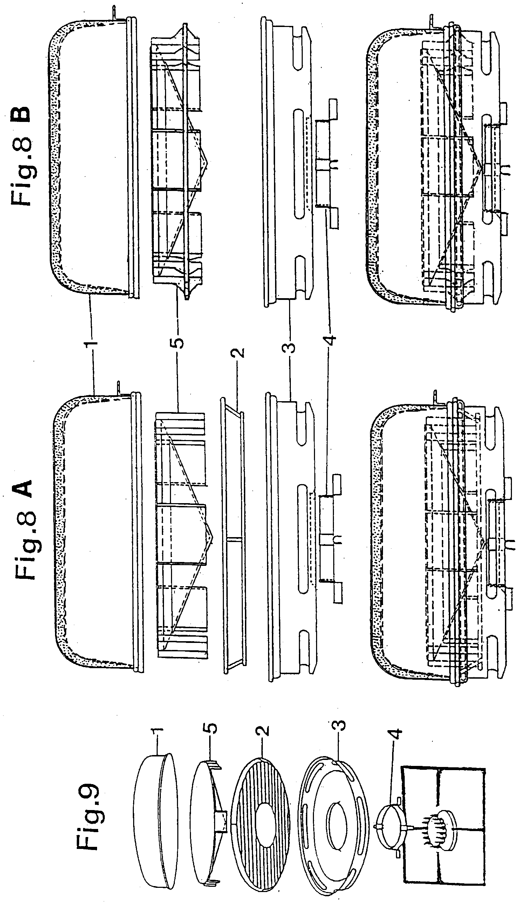

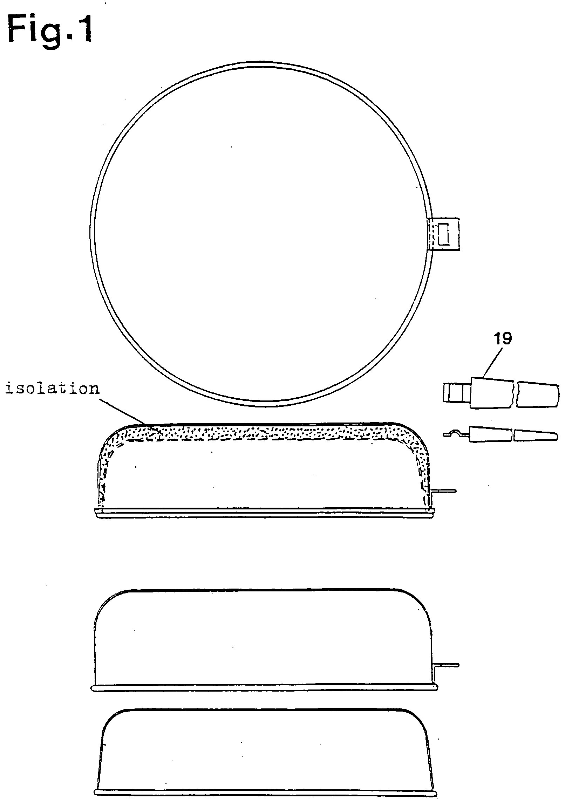

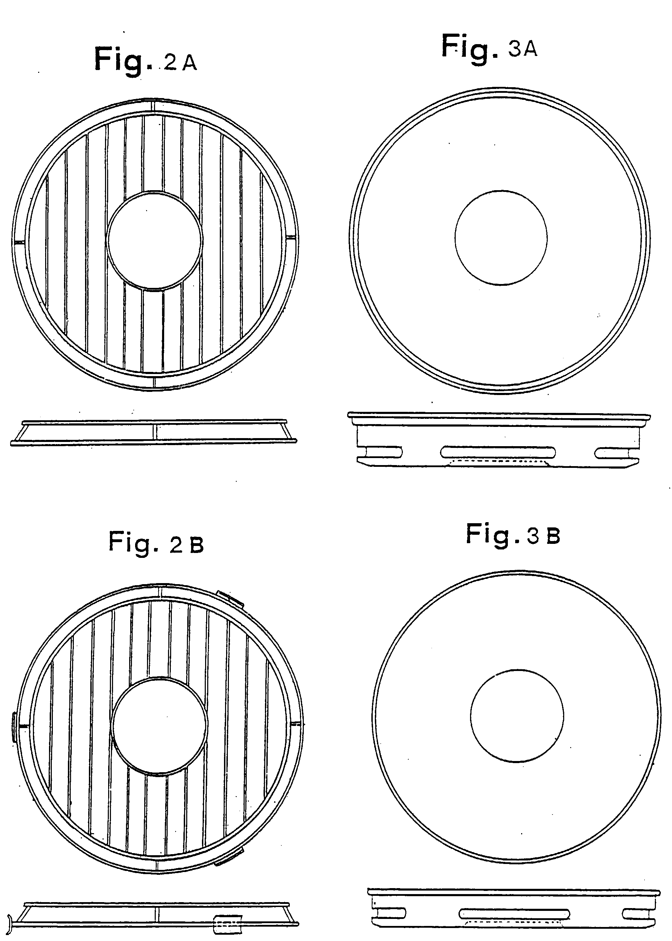

Le but de cette invention est d'avoir en main un petit four transportable constitué de telle façon qu'il peut être utilisé comme gril et aussi comme four pour la cuisson notamment de pizzas ou tartes. Il est utilisable dans les appartements sur les brûleurs des cuisinières à gaz, en campagne et à bord des bateaux au moyen d'un réchaud à butane, ce petit four est tel que défini à la revendication 1, d'autre part ce petit four est fixé au centre du brûleur de la cuisinière à gaz, sans qu'il puisse se déplacer, afin de permettre aux flammes de passer par une ouverture centrale, l'air chaud passe par l'ouverture centrale du plateau Fig. 3 et monte vers le haut du couvercle Fig. 1, il redescend et s'évacue à l'extérieur par les ouvertures latérales du plateau Fig. 3.

Dans le DE-A-3 928 730 est décrit un four utilisé comme gril.

Le petit four, objet de l'invention, sera décrit à l'aide de formes d'exécution présentées sur les dessins sur lesquels:
La figure 1 montre des vues en plan, en élévation et en éclaté du couvercle du petit four,
les figures 2A et 2B montrent des vues en plan et en élévation de deux formes d'exécution de la grille du petit four,
les figures 3A et 3B montrent des vues en plan et en élévation de deux formes d'exécution du plateau du petit four pour les deux formes d'exécution de la grille,
la figure 4 montre diverses formes d'exécution du support pour le petit four,
les figures 5A et 5B montrent deux formes d'exécution du dispositif pour cuire des pizzas ou tartes du petit four vu notamment selon A et B,
la figure 6 montre le petit four avec deux positions de la grille, mais sans le dispositif,
la figure 7 montre le petit four en éclaté, d'après la figure 6, sur un brûleur d'une cuisinière à gaz,
la figure 8A montre le petit four avec le dispositif et la grille,
la figure 8B montre le petit four avec seulement le dispositif, et
la figure 9 montre le petit four en éclaté, d'après la figure 8A, sur un brûleur d'une cuisinière à gaz.

Le petit four, objet de l'invention, est composé d'un couvercle Fig. 1, avec une double paroi et, entre les deux parois une isolation thermique, laquelle permet d'avoir moins des pertes de chaleur et d'obtenir une température plus élevée à l'intérieur du petit four avec la même puissance de feu. Pour empêcher que la poignée 19 chauffe,elle peut être détachable.

Le petit four comprend une grille Fig. 2 dont la base est distante et de diamètre supérieur à la partie grille, ce qui permet de placer la partie grille à deux niveaux différents dans le petit four en fonction des besoins, en l'inversant simplement. A l'intérieur du petit four l'air chaud a une température plus élevée dans la partie supérieure que dans la partie inférieure, donc, selon les aliments qui doivent être grillés et, qui nécessitent soit une cuisson rapide à haute température ou, plus lente à une température plus modérée, on peut placer la grille en haut ou en bas. Si l'on place la partie grille en bas, il reste plus de place à l'intérieur du petit four et on peut cuire des aliments plus volumineux. Cette grille a une ouverture centrale pour laisser passer l'air chaud, dans cette ouverture on ne doit jamais rien mettre, Les aliments se placent tout autour de la grille. Cette grille est présentée en deux modèles A et B, le modèle A s'emboîte dans le plateau Fig. 3A et le modèle B se superpose simplement sur le plateau Fig. 3B contre ses butées qui le fixent.

Le petit four comprend également un plateau Fig. 3 avec une ouverture centrale à sa base pour laisser passer la flamme du brûleur et l'air chaud, ainsi que plusieurs ouvertures dans la paroi latérale pour laisser sortir l'air tiède de l'intérieur pour qu'il soit remplacé par de l'air chaud. Sur ce plateau prend appui la grille Fig. 2.

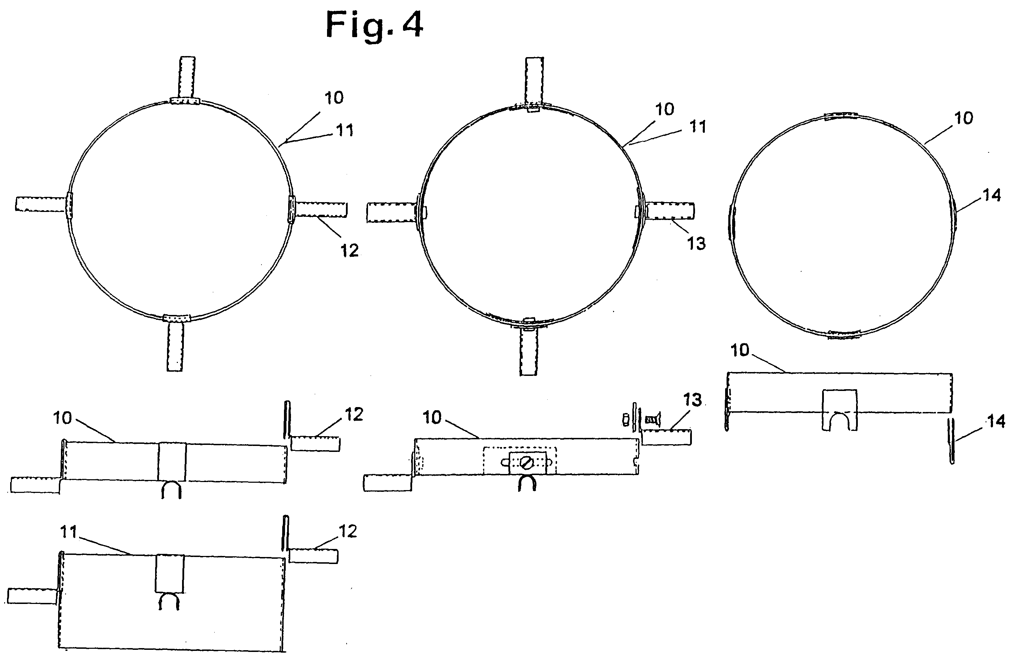

Le petit four est constitué encore d'un support Fig. 4, qui sert à fixer le petit four au centre du brûleur de la cuisinière à gaz et à empêcher qu'il se déplace. Ce support se place à l'intérieur de l'ouverture du plateau Fig. 3, et il est composé d'une bague 10 ou 11 et de 4 crochets qui peuvent être de différentes formes 12-13-14, et qui s'emboîtent d'un côté sur la bague 10 ou 11 et de l'autre côté sur la grille de la cuisinière à gaz. Ces crochets sont interchangeables et ils s'adaptent à toutes les grilles des cuisinières à gaz. La bague de ce support peut avoir différentes dimensions en largeur (voir Fig. 4, 10 et 11). La bague 10 s'adapte à toutes les grilles des cuisinières à gaz, par contre la bague 11 peut uniquement être utilisée quand les nervures de la grille de la cuisinière ne dépassent pas l'ouverture du plateau Fig. 3, mais elle a l'avantage que lorsque le brûleur de la cuisinière à gaz est trop grand de diamètre la paroi de la bague empêche les flammes de toucher le plateau Fig. 3, l'empêchant de chauffer. (C'est très important qu'il ne chauffe pas).

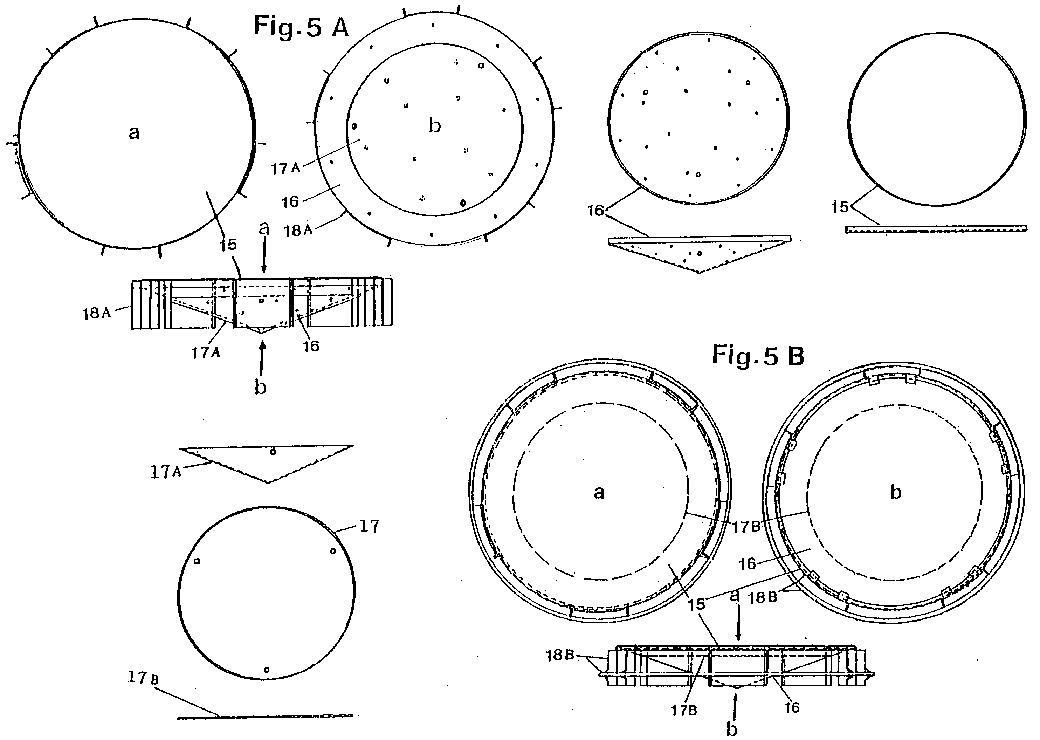

Le petit four peut comprendre encore un dispositif Fig. 5, qui sert pour cuire les pizzas, tartes, réchauffer des plats etc.. Ce dispositif a la forme d'un cône mis à l'envers et il se place à l'intérieur et au centre du petit four, sur la grille Fig. 2. ou sur le plateau Fig. 3. soit, directement sur la flamme du brûleur de la cuisinière à gaz, et sa partie supérieure 15 est plate et lisse c'est où l'on place les pizzas, tartes etc. Sur le modèle 5A la partie inférieure a une paroi secondaire 17A qui couvre environ les 3/4 de la paroi principale 16 et entre les deux il y a un espace. Dans la paroi principale 16 il peut y avoir quelques trous pour permettre à la chaleur que dégage la paroi secondaire 17A de passer jusqu'au plateau supérieur 15. Le diamètre de la paroi secondaire 17A, l'écartement des trous de la paroi principale 16, et l'espace entre les deux parois étant calculés de façon qu'en plein fonctionnement la température du plateau supérieur 15 soit à peu près la même que l'air chaud qu'il y a dans le petit four. La paroi secondaire 17 peut être fabriquée et placée de différentes façons (voir Fig. 5A et 5B), sur le modèle 5B la paroi secondaire 17B a la forme d'un disque et elle est placée à l'intérieur en dessous du plateau supérieur 15. Ce dispositif peur avoir plusieurs sortes de pieds 18A et 18B pour sa stabilité, ces pieds peuvent être de forme et de longueur différentes selon qu'il à été construit ( Fig. 8A et 8B ) pour être placé sur la grille Fig. 2. ou sur le plateau Fig. 3. Dans les espaces entre les pieds, il y a l'air chaud qui monte, et, dans les parties en face des pieds, l'air tiède descend pour ressortir par les ouvertures latérales du plateau Fig. 3. . Ce dispositif a un diamètre plus petit que celui du couvercle Fig. 1. afin de permettre à l'air chaud de l'intérieur du petit four de circuler par les parties latérales.

Les Fig. 6 - 7 - 8 - 9 présentent l'ensemble de ce petit four et ses différentes utilités. Dans les Fig. 6 et 7, il y a la grille Fig. 2. mais il n'y a pas le dispositif Fig., 5. Monté de cette façon, le petit four est prêt pour y faire des grillades. Dans les Fig. 8A et 9, la partie grille Fig. 2. est en bas par rapport à sa base, et il y a le dispositif Fig. 5. qui s'appuie sur la grille Fig. 2., et sur la Fig. 8B: il s'appuie sur le plateau Fig. 3. Monté de cette façon, le petit four est prêt pour la cuisson des pizzas, tartes, etc..

## Revendications

1. Petit four constitué de telle façon qu'il peut être utilisé comme gril et aussi comme four pour la cuisson notamment de pizzas ou tartes, caractérisé en ce qu'il comprend un support (4) avec des moyens lui permettant d'être retenu au centre d'un brûleur d'une cuisinière à gaz sans pouvoir se déplacer, une grille (2) amovible constituée d'une partie grille et une base, ladite grille (2) étant configurée de telle façon que sa base est distante de la partie grille et a un diamètre supérieur à ladite partie grille, et un dispositif (5) qui a la forme d'un cône à l'envers, monté de façon amovible à l'intérieur et au centre du petit four pour la cuisson notamment de pizzas ou tartes.

2. Petit four selon la revendication 1, caractérisé par le fait que la grille (2) peut être placée à deux niveaux différents sur un plateau (3) dans le petit four en fonction des aliments à griller en l'inversant simplement.

3. Petit four selon la revendication 1, caractérisé par le fait que le support (4) est placé à l'intérieur de l'ouverture centrale du plateau (3), et est composé d'une bague (10 ou 11) et de 4 crochets de formes diverses (12-13-14), lesdits crochets s'emboîtant d'un côté sur la bague (10-11) et de l'autre côté sur la grille d'une cuisinière à gaz.

4. Petit four selon la revendication 2, caractérisé par le fait que le dispositif (5) qui a la forme d'un cône mis à l'envers se place de façon amovible à l'intérieur et au centre du petit four sur la grille (2) ou sur le plateau (3), sa partie supérieure (15) étant plate et lisse, et sa partie inférieure ayant une paroi secondaire (17A) qui couvre environ les 3/4 d'une paroi principale (16), avec un espace entre les deux, ledit dispositif ayant plusieurs pieds (18A et 18B) pour sa stabilité, ces pieds étant conformés de façon à pouvoir se placer soit sur la grille (2) soit sur le plateau (3), ledit dispositif ayant un diamètre plus petit que celui d'un couvercle (1) pour permettre à l'air chaud de l'intérieur du petit four de circuler sur les parties latérales.

5. Petit four selon la revendication 4, caractérisé par le fait que la paroi secondaire (17A, 17B) du dispositif a la forme d'un disque et est disposée à l'intérieur et en dessous de la partie supérieure.

6. Petit four selon la revendication 4, caractérisé par le fait que la paroi principale (16) du dispositif possède quelques trous pour permettre à la chaleur qui se dégage de la paroi secondaire de la partie inférieure de passer jusqu'à la partie supérieure.

## Patentansprüche

1. Klein - Backofen bildet dass weise der sowie als Grill, als auch Backofen vor allem zum backen von Pizzas oder Kuchen benützt werden kann, daduch gekennzeichnet dass der bestehen einer Stütze ( 4 ) mit begabt ihm gestatten sein fest im Zentrum des Gasbrenner angebracht werden kann,einen Grill ( 2 ) abnehmbar bilden die eine Grillteil und einen Basisteil, der Grill ( 2 ) gestalten weise dass dessen Basis vom Grillteil getrennt ist, und hat gröserem Durchmesser als der Grillteil, und ein Vorrichtung ( 5 ) der hat die Form eines umgekehrten Kegels, abnehmbar weise montieren im Inneren und in der Mitte des Klein - Backofen vor allem zum backen von Pizzas oder Kuchen,

2. Klein - Backofen nach Anspruch 1, dadurch gekennzeichnet dass der Grill ( 2 ) auf zwei verschiedene Höhen einstellen auf der Platte ( 3 ) in der Klein - Backofen kann je nach den zu garenden Nahrungsmitteln einfach umdreht.

3. Klein - Backofen nach Anspruch 1, dadurch gekennzeichnet dass die Stutze ( 4 ) in die zentrale Offnung der Basisplatte ( 3 ) passt, und besteht aus einen Ring (10 oder 11 ) und vier Haken von verschiedener Form ( 12 - 13 - 14 ), die einerseits auf dem Ring 10 oder 11 eingehakt sind und andrerseits auf dem Grillgitter des Gasherdes eingehakt werden können.

4. Klein - Backofen nach Anspruch 2, dadurch gekennzeichnet dass die Vorrichtung (5 ) hat die Form eines umgekehrten Kegels, abnehmbar weise ist im Inneren und in der Mitte der Klein - Backofen, auf der Grill ( 2 ) oder auf die Platte ( 3 ) aufgesetzt, sein oberer Teil ( 15 ) ist flach und glatt, der untere Teil hat eine nebenwand ( 17A ) die etwa ¾ die Hauptwand ( 16 ) bedeckt, zwischen diesen beiden Teilen ist ein Zwischenraun, diese Vorrichtung kann zur grösseren Stabilitä mehrere Füsschen haben ( 18A und 18B ),diese Füsschen sind gemassweise kann wird auf der Grill ( 2 ) oder auf der Platte ( 3 ) aufliegen können, dieser Vorrichtung ist von kleinerem Umfang als der Deckel ( 1 ) um die Heissluft in der Kein-Backofen durch die Seiten zirkulieren zu lassen.

5. Klein - Backofen nach Anspruch 4, dadurch gekennzeichnet dass die nebenwand ( 17B ) zum Vorrichtung hat die Form einer Scheibe und ist im innerem unter der oberen Teil aufgelegt.

6. Klein - Backofen nach Anspruch 4, dadurch gekennzeichnet dass die Hauptwand ( 16 ) zum Vorrichtung sind Löchern vorgesehen, damit die Hitze die von diesem Nebenwand ausgeht bis zur oberen Platte durchgeht.

## Claims

1. Small oven made up such a way to be used like a grill and also like a oven for cooking specially pizzas or tarts characteristic in that it consists of a support ( 4 ) which hold it firmly in the middle of a gas cooker burner without can move, a removable grill ( 2 ) which consists of a grill part and a base, the said grill ( 2 ) is made up such a way that its base is separated from the grill portion and it has a larger diameter than the said grill portion, and a device ( 5 ) which has the form of an inverted cone, it is detachable and placed inside and in the middle of the small oven for cooking specially pizzas or tarts.

2. Small oven according to claim 1, characteristic in that the grill portion can be putted at two different levels on the tray ( 3 ) in the small oven simply by turning it over, depending on the food to cook.

3. Small oven according to claim 1, characteristic in that the support ( 4 ) fits into the central opening of the tray ( 3 ), it consists of a ring ( 10 or 11 ) and 4 hooks of different shapes ( 12 -13 -14 ), the said hooks on the one side they hooked onto the ring ( 10 or 11 ) and the other side they hooked onto the gas cooker grate

4. Small oven according to claim 2, characteristic in that the device ( 5 ) which has the form of an inverted cone is to be placed in detachable manner inside and in the middle of the small oven, on the grill ( 2 ) or on the tray ( 3 ), its upper part ( 15 ) is flat and smooth, and in the inferior part is a secondary screen ( 17A ) which covers about ¾ of a main wall ( 16 ), and in between is a space, for its stability the said device may have several legs ( 18A and 18B ), this legs being according to where the device is to be placed either on the grill ( 2 ) or on the tray ( 3 ), the said device has a smaller diameter than a lid ( 1 ) so that the hot air in the small oven may circulate through the lateral opening.

5. Small oven according to claim 4, characteristic in that the secondary screen ( 17B ) of the device has the form of a disk and it is placed inside and under the upper tray.

6. Small oven according to claim 4, characteristic in that the main wall ( 16 ) of the device has several holes so that the heat coming from the lower secondary screen radiates to the upper tray.
